# EUROPEAN PATENT APPLICATION

(11) **EP 1 361 150 A1**
(43) Date of publication of application: **12.11.2003**
(21) Application number: 02076817.2
(22) Date of filing: 07.05.2002
(51) Int. Cl.: B63B 1/38

(54) **Air cavity vessel with wedge-shaped cavities, longitudinally offset cavities, and roll control means**

(71) Applicant: DK Group N.A. N.V., Curaçao (AN)
(72) Inventor: Matveev, Konstantin, Pasadena, CA 91106 (US); Winkler, Joern Paul, c/o DK Group Netherl.B.V., 3012 NJ Rotterdam (NL)
(74) Representative: van Westenbrugge, Andries

(57) **Abstract**

The invention relates to an air cavity vessel (1) comprising a hull (3) with a bow (11), a stern (12) and a propeller (13) near the stern, at least one open cavity (4,5,6) being formed at the bottom (29) of the hull, the cavity being enclosed by a two side walls (41,42) extending in a lenght direction of the vessel, a rear wall (43) and a front wall (44), the rear wall comprising a downwardly sloping wall part, when going in a rearward direction, and air injection means (7,10) for supplying air into the cavity, characterised in that at least one of the front and rear walls (43,44) comprises a first plate-shaped wall part (45) being with a lower transverse side (46) connected to the bottom (29) of the vessel, and being with its longitudinal sides (47,48) connected to a respective side wall (41,42), an upper transverse side (49) being located at a distance from the hull bottom (29) and being connected to a second plate-shaped wall part (50), the second wall part (50) being connected to the side walls (41,42) and to the bottom (29) of the hull or to a wall part of an adjacent cavity, the first and second wall parts (45,50) enclosing a wedge-shaped, closed space.

## Description

The invention relates to an air cavity vessel comprising a hull with a bow, a stern and a propeller near the stem, at least one open cavity being formed at the bottom of the hull, the cavity being enclosed by a two side walls extending in a length direction of the vessel, a rear wall and a front wall, the rear wall comprising a downwardly sloping wall part, when going in a rearward direction, and air injection means for supplying air into the cavity.

Such an air cavity vessel is known from US-A- 3,595,191 in which the bottom of the hull of a large ocean going vessel, such as an oil tanker, is provided with a number of downwardly opening air cavities into which compressed air is introduced. Hereby the water contact surface of the vessel is reduced and its hydrodynamic properties are improved, such as for instance a reduction of water resistance. In the air cavities a wave pattern is generated, which is influences the vessel's hydrodynamic performance.

It is therefore an object of the invention to provide an air cavity vessel in which the air cavities are shaped to generate a wave pattern resulting in a stable sea going and reduced water resistance. It is in particular an object of the present invention to provide an air cavity vessel having a reduced pressure drag and requiring relatively low air pressures and/or low volumes to fill the cavities with air.

It is a further object of the present invention to provide an air cavity vessel, which comprises cavities, which may be formed in a relatively easy manner. It is again an object of the present invention to provide an air cavity vessel, in which the cavities may be attached to the hull of an existing vessel.

It is again an object of the invention to provide an air cavity vessel which has stabilised roll motion.

Hereto an air cavity vessel according to a first embodiment of the present invention, is characterised in that at least one of the front and rear walls comprises a first plate-shaped wall part being with a lower transverse side connected to the bottom of the vessel, and being with its longitudinal sides connected to a respective side wall, an upper transverse side being located at a distance from the hull bottom and being connected to a second plate-shaped wall part, the second wall part being connected to the side walls and to the bottom of the hull or to a wall part of an adjacent cavity, the first and second wall parts enclosing a wedge-shaped, closed space.

The front and rear wall geometry will allow a wave to fit, at the design speed range of the vessel, into the cavity, the wave crest being located at or near the lower transverse edge of the second plate-shaped wall part, the wave shape being deflected downwardly and following the sloping rear wall part. By properly accommodating the wave shapes in the cavity, it was found that a shock-free cavity closure is achieved and that a large drag reduction occurs, while at the same time the air injection can be reduced, resulting in a power saving. Furthermore, the cavity of the present invention can be relatively easily constructed from plate-shaped parts, in a shipyard, and can be fitted to newly built vessel, but can also be used to retrofit existing vessels, by attaching the side walls and transverse walls to the bottom of an existing hull.

The length of the wedge-shaped rear wall may be between 1 and 0.1 times the length of the cavity, preferably between 0.5 and 0.1 times the length of the cavity.

In one embodiment, two cavities are placed one behind the other. The front wall of the rearmost cavity is formed by the plate-shaped second wall part of the frontmost cavity that attaches along a smooth transition to the first plate-shaped wall part of the foremost cavity. Hereby, flow separation along the lowermost part of the wedge-shaped cavity closure is prevented.

In another embodiment of an air cavity vessel of the present invention, at least a first and a second cavity are located side by side in a transverse direction, wherein the front and rear walls of the first cavity are located at a different position in the length direction form the front and rear walls of the second cavity.

It was found that in the cavities, a wave pattern is generated which is similar to the wave pattern outside the hull of the vessel. The wave pattern in the cavities is not purely transversely directed, but was found to be oblique. By using an offset position of the air cavities which in the transverse direction lie side by side, an interference between the wave systems within cavities can be obtained such that the vessel's resistance is decreased. By the longitudinally offset air cavities, the wave pattern outside the hull of the vessel is improved such as to further reduce the vessel's resistance.

In a further embodiment of an air cavity vessel according to the present invention, roll control means are provided, comprising a roll angle detector, an individually controllable air supply to a cavity on a respective side of the longitudinal centre line, such that upon tilting of the vessel in a tilt direction around the longitudinal centre line, one cavity being raised and one cavity being lowered, the angle detector generates a control signal for increasing the air supply to the cavity which is raised.

In this way, an active dampening system to reduce the ship motions (roll, pitch and yaw) during seagoing is provided. In particular, roll restoring moments may be created to correct a static angle of heel due to wind forces, thus enabling an optimal functioning of the air cavity system.

A non-limiting embodiment of the air deflector according to the present invention will be explained in detail, by way of example, with reference to the accompanying drawings. In the drawings:
Fig. 1 shows a side view of a tanker or bulk carrier vessel comprising air cavities, and an air deflector according to the present invention,
Fig. 2 shows a bottom view of the vessel of Fig. 1,
Fig. 3 shows a cross-sectional view of the air deflector along line III-III in Fig. 2,
Fig. 4 shows a perspective view of two adjacent air cavities comprising wedge-shaped front and rear walls,
Fig. 5-8 show a schematic side view of different embodiments of air cavities;
Fig. 9 shows a combined top and bottom plan view of a vessel comprising air cavities that are offset in the length direction, and
Fig. 10 shows a schematic transverse cross section of an air cavity vessel with a roll control device.

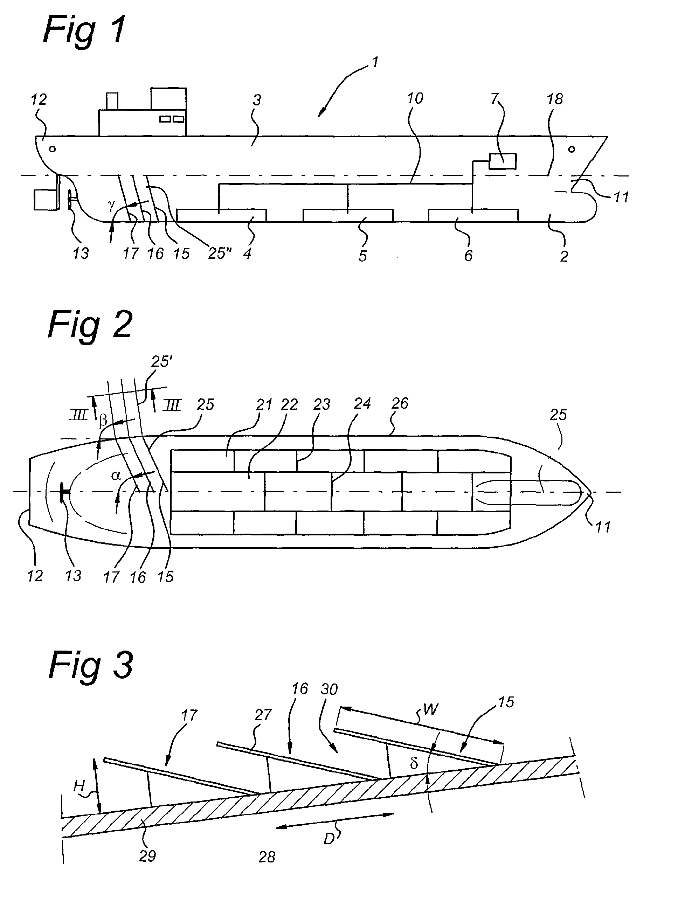

In Fig. 1 an oil tanker or bulk carrier 1 is shown, which may have a tonnage of for instance between 50.000 and 500.000 ton. At the bottom 2 of the hull 3, the vessel comprises a number of air cavities 4, 5, 6, which are open at their downward facing surfaces. Via a compressor 7, compressed air is injected into the cavities 4-6 via a series of ducts 10. Each cavity may have a length of about 0.5 - 30 m, a width of about 0.5 - 20 m and a depth of about 0.3 - 5 m. The height of the cavities is such that at maximum trim the cavities are still completely filled with air, and will in general correspond with the height of a computed wave crest inside the cavity. The width of the cavities is such that at least two rows of cavities extend in the length of the vessel, when seen in the width direction. The length Lc of the cavities of a slow sailing non-fin-stabilised monohull vessel at design speed v of the vessel may be given by Lc = 0.34 v².

The air is supplied at a pressure of 1.5 - 4 bar, and is slightly larger than the hydrostatic pressure in the cavity at the corresponding draught of the vessel. The rate of the air supply is such as to keep each cavity as dry as possible under the given conditions (speed, sea state. etc.), and will be trapped in a stable situation in each air cavity, excess air escaping from the rear parts of each cavity.

At the bow 11 the vessel 1 comprises a bulbous portion, reducing water resistance. At the stern 12, a submerged, non-ventilated propeller 13 drives the vessel at speeds of between 8 and 30 knots. Near the stern 13, between the rearmost air cavity 4 and the propeller 13, three parallel air deflectors 15,16,17 extend along the outside surface of the hull, obliquely in a rearward direction at an angle γ with the horizontal, for guiding air escaping from the cavities 4-6, parallel to the deflectors, from the bottom 2 towards the water surface 18. This prevents air from entering into the propeller plane and keeps the air level at the propeller 13 lower than for instance 10% by volume. In this way, no special design modifications to the propeller need to be made, which is of advantage when the air cavities 4-6 are retrofitted onto an existing vessel.

As can be seen in Fig. 2, a number of air cavities 21, 22 extends at the bottom of the vessel, wherein the transverse partitions 23, 24 of the outer and inner cavities are offset in the direction of longitudinal centre line 25 for optimum wave shaping in the cavities. The transverse partitions 23,24 may be of wedge-shaped cross-section, the depth of each cavity gradually varying at the front and the rear of each cavity.

Between the rearmost cavities 21 and the propeller 13, the three wedge-shaped air deflectors 15, 16,17 extend at an acute angle α of for instance 80° - 110° with the longitudinal centre line 25, towards the tanging line 26, which is formed by the boundary of the substantially horizontal bottom part of the hull 1. In Fig. 2, the lower part 25 and intermediate part 27 of the air deflectors on only one side of the vessel are shown, while in actual fact the air deflector layout is symmetrical about the longitudinal centre line 18. From the tanging line 26, the air deflectors 15-17 extend with their intermediate parts 25' at an angle *β* with the longitudinal direction, along the sides of the hull, for instance up to water level 18. The angle β depends on the design speed of the vessel and the upward velocity of air bubbles in water. The upper parts 25" of the air deflectors 15-17 extends at an angle γ to the vertical, as can be seen in Fig. 1. The angles α, *β* and γ depend on the vessel design, such as the design speed and the air escape angle at the design speed and are laid out to guide the air bubbles to the surface without a transverse acceleration.

As can be seen from Fig. 3, the air deflectors 15-17 comprise a wedge shaped cross section, and are formed by a sloping strip 27 and a transverse strip 28, which are welded to the wall 29 of the hull 3. The width W of each strip may be 0.3 - 3 m while the height h of the rearmost part above the hull wall 29 is determined by the average amount of air escaping from the last cavity and may be 0.1 - 2 m, whereas the distance D between the deflectors may be 0.1 - 10 m and the angle δ with the hull wall 29 is 10° - 90°.

At the rear ends 30 of the air deflectors 15-17 a low-pressure zone is formed, in which air bubbles are trapped. The trapped air is guided in the low-pressure zone, along the deflectors, from the bottom 2 to the sea surface 18, such that air ingress into the zone of propeller 13 is prevented.

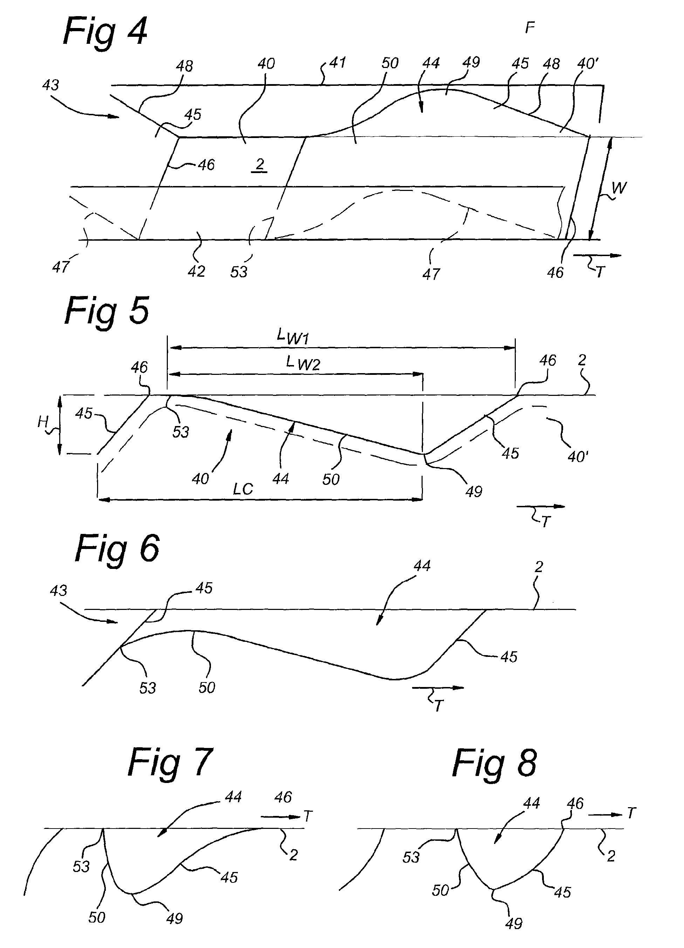

Fig. 4 shows a schematic view of a cavity 40, the vessel being shown in a position in which the bottom faces upward, wherein the bow of the vessel is located to the right hand side of Fig. 4, the direction of sailing being indicated with arrow T. The cavity 40 is bounded by plate-shaped side walls 41, 42, a wedge-shaped front wall 44 and a wedge-shaped rear wall 43. The front and rear walls 43, 44 each comprise a plate shaped wall part 45, which is connected with its lower transverse side 46 to the bottom 2 of the hull 3 .The wall part 45 is inclined and extends away from the bottom 2. The longitudinal sides 47, 48 of the wall part 45 are connected, for instance by welding, to the side walls 41, 42. Along upper transverse edge 49, the first wall part 45 is connected to a second wall part 50, which comprises a sloping plane and which is with its lower edge 53 connected to the bottom 2. The transition of the wall part 45 to the wall part 50 along edge 49 and of wall part 50 to the bottom 29 along edge 53 should be gradual to prevent flow separation along edges 49 and 53. A wedge-shaped, enclosed box structure 44 is formed by the first and second wall parts 45, 50.

Fig. 5 shows a schematic side view of air cavity 40. The pattern of a wave, which is situated in the cavity 40, is such that the wave peak is located near the lower transverse edge 53 of wedge-shaped front wall 44 and will then be deflected by the wall part 45, as shown by the dotted line in Fig. 5. The wedge-shape of the box-like front and rear walls 43, 44 of the air cavity 40, 40' is such that an optimal flow is obtained and a shock-free cavity closure, i.e. that pressure drag phenomena are strongly reduced. The cavity shape according to the present invention requires relatively little airflow to maintain the cavity filled with air as it achieves a high degree of drag reduction at low air injection levels.

The Length L _{W1} of the wedge-shaped wall 44 may for instance be about 10 m, at a dept H of the cavity 40 (height of the side walls 41,42) of 1 m. The length L_{W2} of he second wall part 50 may be about 7 m, whereas the length L_{c} of the cavity 40 is about 10 m. The width W (see Fig. 4) of the cavity 40 may be about 4 m.

Fig. 6 shows an embodiment in which the curved second wall part 50 of frontmost wedge-shaped wall 44 attaches to the sloping wall part 45 of rearward wedge-shaped wall 43. Such a cavity construction is best suitable for operation in calm waters in contrast to the cavity shown in Fig. 5 in which wall part 50 attaches along its lower edge 53 to the bottom 2, rendering the cavity more suitable for operation in rough waters, such as at sea.

As shown in Fig. 7, the second wall part 50 slopes downwardly relatively steeply, the wall part 45 having near the bottom 2 and near the edge 49 a generally horizontal orientation.

In the embodiment of Fig. 8, the wall part 45 has a convex shape in contrast to the concave wall part 45 of Fig. 7. Different designs are possible according to the intended operation speed and water conditions (with or without weaves, in the absence or presence of strong winds or currents etc).

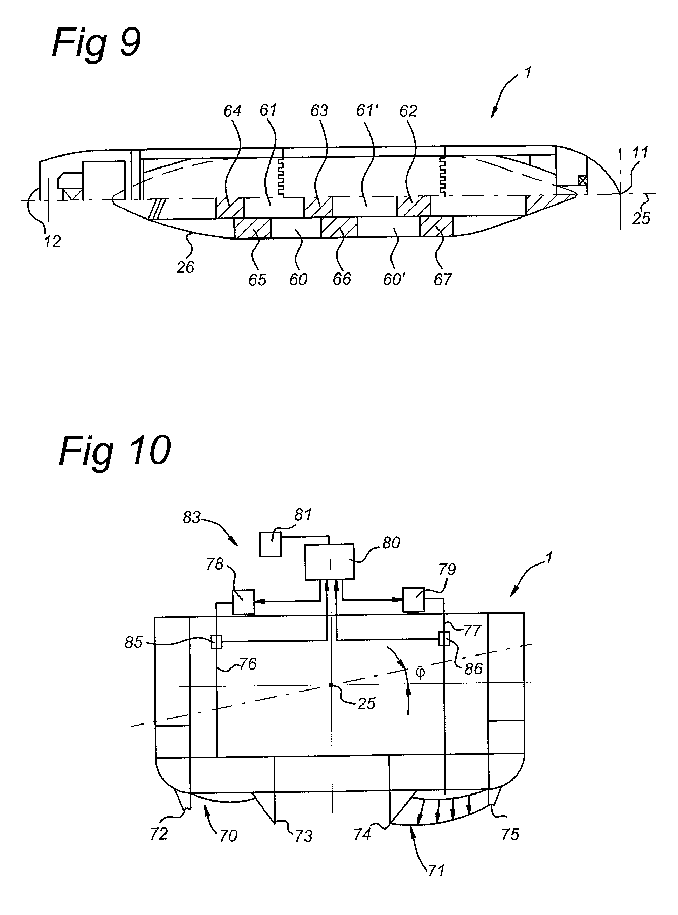

Fig. 9 shows a vessel 1, in both top view and bottom view, form which it can be seen that the two rows of air cavities 60, 60', 61, 61' extend side by side in the length direction of the vessel. The wedge shaped walls 62,63,64 of the cavities 61, 61' are located at different locations along the longitudinal centre line 25 than the wedge shaped walls 65, 66 and 67 of the cavities 60, 60'. In this way, the oblique wave pattern in the cavities is optimised to lower the vessel's water resistance.

Fig. 10 shows a vessel 1 of the present invention, comprising a roll control means 83. Cavities 70, 71 are located on respective sides of the longitudinal centreline 25 and connect via air ducts 76, 77 to compressors 78, 79. The compressors are controlled by a computer 80, which receives as an input a detector signal generated by angle detector 81. By controlling the amount of air introduced into each cavity 70, 71, not only optimal performance in every operational condition may be obtained, but also a dampening system for the ship's motions in seaways is provided and roll restoring moments may be generated.

In the upright position at zero inclination, the air is trapped between the side walls, or skegs 72, 73 and 74, 75 of the cavities 70, 71 in a like manner, and the air supply through ducts 76, 77 is regulated by the computer 80 on the basis of speed, loading and environmental conditions. To prevent a sudden drop in cavity pressure by escape of air, airflow monitors 85, 86 may be incorporated into ducts 76,77 for detecting such a pressure drop. In response to a pressure drop, the respective compressor 78,79 may be stepped up to provide for a rapid pressure build up in the respective cavity.

When the vessel is inclined, for instance through heel angle ϕ, the cavity 71 is raised. For small angles of heel, such as 5 degrees, the angle of heel of the cavity walls 74, 75 is expected to incline by a similar amount. The angle detector 81 generates a detector signal in response to the inclination, such that the computer 80 activates compressor 79, and the pressure in cavity 71 is increased. As the height of the side wall 74 is larger than the height of side wall 75, larger amounts of air will be supplied to the inner cavity area upon listing of the vessel. The increase in volume of the cavity 71 causes the centre of buoyancy of the vessel to move towards the side to which is the vessel is heeled (to the left-hand side in this figure) which causes a restoring moment restoring the vessel to its upright position. The computer 80 controls during uprighting the air supply to the cavity 71 to remove the extra air in the cavity 71, optionally through duct 77, before the vessel reaches its zero heel position to avoid "overshoot angles" in the opposite direction.

Instead of a roll angle detector 81, a second order detector may be used which measures the roll accelerations. The roll control system of the present invention will provide a roll stabilisation without significantly increasing the ship's resistance, such as is the case when for instance stabiliser fins are used.

The air cavity system and roll control system may be built into new ships or may be fitted to existing ships with displacement hulls.

## Claims

1. Air cavity vessel (1) comprising a hull (3) with a bow (11), a stern (12) and a propeller (13) near the stem, at least one open cavity (4,5,6) being formed at the bottom (29) of the hull, the cavity being enclosed by a two side walls (41, 42) extending in a length direction of the vessel, a rear wall (43) and a front wall (44), the rear wall comprising a downwardly sloping wall part, when going in a rearward direction, and air injection means (7,10) for supplying air into the cavity, **characterised in that** at least one of the front and rear walls (43, 44) comprises a first plate-shaped wall part (45) being with a lower transverse side (46) connected to the bottom (29) of the vessel, and being with its longitudinal sides (47, 48) connected to a respective side wall (41, 42), an upper transverse side (49) being located at a distance from the hull bottom (29) and being connected to a second plate-shaped wall part (50), the second wall part (50) being connected to the side walls (41, 42) and to the bottom (29) of the hull or to a wall part of an adjacent cavity, the first and second wall parts (45, 50) enclosing a wedge-shaped, closed space.

2. Air cavity vessel according to claim 1, wherein the length of the length (L_{w}) of the first and second wall parts (44, 45) in the length direction being between 0.5 and 0.1 times the length (L_{c}) of the cavity, preferably between 0.5 and 0.1 times and most preferably between 0.3 and 0.2 times the length of the cavity.

3. Air cavity vessel according to claim 1 or 2, wherein at least two cavities (40, 40') are adjacent in the length direction, the second wall part of the foremost cavity comprising a sloping plane (50) attacking along a smooth transition (49) to the first plate shaped wall part (45).

4. Air cavity vessel according to any of the preceding claims, wherein at least a first and a second cavity (60, 61) are located side by side in a transverse direction, wherein the front and rear walls (65, 66) of the first cavity (60) are located at a different position in the length direction form the front and rear walls (63, 64) of the second cavity (61).

5. Air cavity vessel according to any of the preceding claims, a cavity being provided on each side of the longitudinal centre line, **characterised by** roll control means, comprising a roll detector, an individually controllable air supply to each cavity, upon tilting of the vessel in a tilt direction one cavity being raised and one cavity being lowered, the roll detector generating a control signal for increasing the air supply to the cavity which is raised.

6. Air cavity vessel comprising a hull (3) with a bow (11), a stem (12) and a propeller (13) near the stern, at least a first and a second open cavity (60, 61) being formed at the bottom (2) of the hull, located side by side in a transverse direction, the cavities being enclosed by a two side walls extending in a length direction of the vessel, a rear wall and a front wall, and air injection means (7,10) for supplying air into the cavity, **characterised in that** the front and rear walls (65, 66) of the first cavity (60) are located at a different position along a longitudinal centre line of the vessel than the front and rear walls (63, 64) of the second cavity (61).

7. Air cavity vessel (1) comprising a hull (3) with a bow (11), a stern (12) and a propeller (13) near the stem, on each side of a longitudinal centre line at least one open cavity (4, 5, 6) being formed at the bottom (2) of the hull, the cavity being enclosed by a two side walls extending in a length direction of the vessel, a rear wall and a front wall, the rear wall comprising a downwardly sloping wall part, when going in a rearward direction, and air injection means (7, 10) for supplying air into the cavity, **characterised by** roll control means (83), comprising a roll detector, an individually controllable air supply to each cavity, upon tilting of the vessel in a tilt direction one cavity being raised and one cavity being lowered, the roll detector generating a control signal for increasing the air supply to the cavity which is raised.
